# FASCICULE DE BREVET EUROPEEN

(11) **EP 1 504 782 B1**
(45) Date de publication et mention de la délivrance du brevet: **31.08.2011**
(21) Numéro de dépôt: 04300453.0
(22) Date de dépôt: 21.07.2004
(51) Int. Cl.: A61M 15/00, B01D 53/047, B01D 53/04

(54) **Générateur autonome d'oxygène**
Sauerstoffgenerator
Oxygen generator

(30) Priorité: 04.08.2003 FR 0350395
(43) Date de publication de la demande: 09.02.2005
(73) Titulaire: L'AIR LIQUIDE, Société Anonyme pour l'Etude et l'Exploitation des Procédés Georges Claude, 75007 Paris (FR)
(72) Inventeur: Basset, Christelle, 38000 Grenoble (FR); Jean, M. Philippe, 38100 Grenoble (FR); Schmutz, M. Nicolas, 38000 Grenoble (FR)
(74) Mandataire: Le Moenner, Gabriel

(56) Documents cités:
- US-B1- 6 261 344
- US-B1- 6 270 556
- US-B1- 6 406 520
- US-B1- 6 475 265
- US-B1- 6 520 176
- DATABASE WPI Section Ch, Week 200316 Derwent Publications Ltd., London, GB; Class J01, AN 2002-640997 XP002274415 & KR 351 621 B (KOREA ADV INST SCI & TECHNOLOGY) 5 septembre 2002 (2002-09-05)
- DATABASE WPI Section Ch, Week 200410 Derwent Publications Ltd., London, GB; Class J01, AN 2003-007220 XP002278061 & JP 2002 306918 A (NIPPON SANSO CORP.) 22 octobre 2002 (2002-10-22)

## Description

La présente invention concerne les générateurs autonomes d'oxygène transportables, également appelés concentrateurs, capables de fournir, par adsorption à variation de pression dans une unité PSA comportant au moins un adsorbeur, de l'oxygène à une pureté comprise entre 90 et 95%.

Les unités PSA fournissent un oxygène dont la pureté dépend du débit de consommation. Même avec des adsorbants performants, à hauts débits on constate une chute rapide des performances et à bas débits une chute progressive mais marquée des performances.

Le document US 6,520,176 concerne un concentrateur d'oxygène portable utilisant une unité PSA à zéolite X ou LSX.

Le document US 6,270,556 décrit une unité PSA à débit et pression de production variables par contrôle de la durée de pompage et de la durée d'alimentation, ces dernières étant ajustées conjointement.

Dans les générateurs autonomes d'oxygène connus, on a proposé d'adapter le process de production à la consommation d'oxygène, notamment en effectuant des arrêts temporaires de l'unité PSA ou en en adaptant le temps de cycle en fonction du débit consommé. De tels systèmes imposent l'intervention d'un opérateur et les temps de stabilisation sont incompatibles avec la réactivité demandée par les patients utilisateurs.

La présente invention a pour objet de proposer un générateur autonome d'oxygène évitant les inconvénients susmentionnés, notamment en ne nécessitant pas de modifications du temps de cycle ni d'interventions humaines, avec maintien d'un régime quasi permanent.

Pour ce faire, selon l'invention, le générateur autonome d'oxygène, du type comprenant une entrée connectable à une source d'air sous pression, une unité PSA avec au moins un adsorbeur, une ligne de sortie d'oxygène connectable à au moins un circuit d'alimentation de voies aériennes d'au moins un utilisateur, comprend en outre, dans la ligne de sortie, un débitmètre fournissant un signal électrique représentatif du débit d'oxygène transitant dans la ligne de sortie, et un circuit de fuite relié à la ligne de sortie et comprenant, en série, une électrovanne, actionnable en réponse à un signal dérivé du signal électrique fourni par le débitmètre, et une restriction calibrée.

Selon d'autres caractéristiques particulières de l'invention :
- Le débitmètre est un débitmètre massique à fil chaud,
- Le générateur comprend, dans la ligne de sortie, une valve de commutation reliée à une source auxiliaire d'oxygène sous pression,
- La ligne de sortie est reliée, en amont, à une capacité tampon formant avantageusement un organe structurel de l'architecture du générateur.

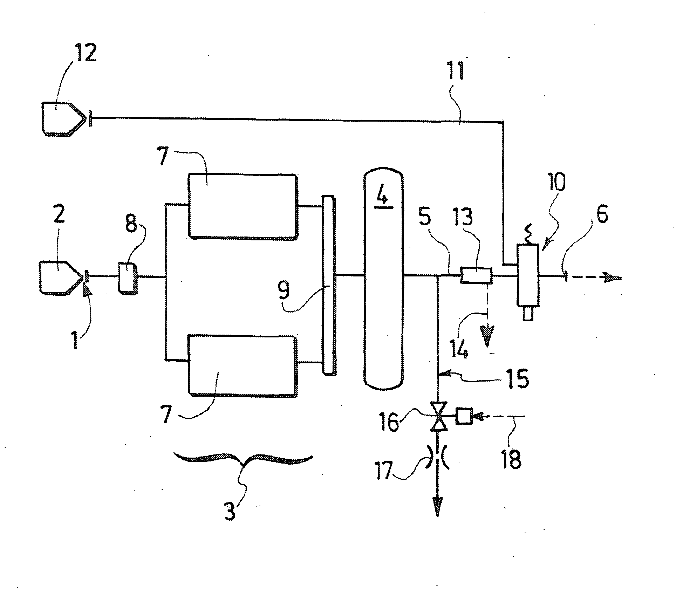

D'autres caractéristiques et avantages de l'invention ressortiront de la description suivante d'un mode de réalisation, donnée à titre illustratif mais nullement limitatif, faite en relation avec le dessin annexé, sur lequel :
La figure unique représente schématiquement un générateur autonome d'oxygène selon l'invention.

Dans le mode de réalisation représenté sur la figure unique, le générateur autonome d'oxygène comprend essentiellement, une entrée d'air 1 connectable à une source de pression d'air 2 disponible sur le site, une unité PSA 3, une capacité tampon d'oxygène 4 et une ligne de sortie 5 vers une sortie 6 connectable à au moins un circuit patient.

Typiquement, l'unité PSA 3 comporte deux adsorbeurs 7, contenant chacun un matériau particulaire susceptible de séparer l'oxygène de l'air, typiquement une zéolite, avantageusement une zéolite au lithium de type LiX, de préférence une zéolite LiLSX.

Un organe de détente de pression 8 est prévu en amont de l'unité PSA 3 pour ajuster la pression d'air provenant de la source 2, généralement aux environs de 7-9 bars, et un manifold de vannes 9, permettant les inversions de circuits et les échanges d'adsorbeur à adsorbeur, est prévu entre l'unité PSA 7 et la capacité tampon (4).

De préférence, la ligne de sortie 5 est équipée d'une valve de distribution 10 connectée à une ligne 11 susceptible d'être reliée à une source d'oxygène pur indépendante 12 pour pallier d'éventuelles défaillances ou indisponibilités de l'unité PSA 3.

Selon un aspect de l'invention, la ligne de sortie 5 comporte un piquage pour un débitmètre massique 13, avantageusement du type à fil chaud, offrant une très faible inertie, fournissant un signal électrique 14 représentatif du débit massique d'oxygène circulant dans la ligne de sortie 5.

Cette dernière est en outre reliée, entre la capacité 4 et la vanne de distribution 10, à une ligne de dérivation 15 débouchant à l'air libre et comprenant, en série, une électrovanne 16 et un orifice calibré ou une restriction 17.

Selon l'invention, l'électrovanne 16 est commandée par un signal électrique 18 dérivé, via une électronique non représentée du signal de débit 14 fourni par le débitmètre 13.

Ainsi, en cas de consommation trop faible d'oxygène, le débit mesuré par le débitmètre 13, descendant au-dessous d'un seuil donné, provoque l'ouverture de l'électrovanne 16 et l'établissement d'une fuite calibrée via la restriction 17 pour simuler un minimum de consommation et continuer à faire travailler l'unité PSA 3 dans la gamme de débits correspondant au plateau de pureté maximum d'oxygène.

L'invention propose ainsi une purge automatisée ne nécessitant pas de modifications de temps de cycle et permettant d'obtenir immédiatement un régime permanent sans nécessité de stabilisation avec des transitoires.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

En particulier, pour obtenir une intégration architecturale poussée du générateur, la capacité tampon 4 est avantageusement conformée pour constituer un organe structurel de l'architecture du générateur, comme décrit dans la demande de brevet français FR 03 06608 au nom de la Demanderesse.

## Revendications

1. Générateur autonome d'oxygène comprenant :
- une entrée (1) connectable à une source d'air sous pression ;
- une unité PSA (3) avec au moins un adsorbeur (7) ;
- une ligne de sortie d'oxygène (5) connectable (6) à un circuit d'alimentation de voie aérienne d'un utilisateur ;
- un débitmètre (13) disposé dans la ligne de sortie et fournissant un signal électrique représentatif du débit d'oxygène transitant dans la ligne de sortie (5) ; et
- un circuit de fuite (15) relié à la ligne de sortie (5) et comprenant, en série, une électrovanne (16), actionnable en réponse à un signal (18) dérivé du signal électrique (14) fourni par le débitmètre (13), et une restriction calibrée (17).

2. Générateur selon la revendication 1, **caractérisé en ce que** le débitmètre (13) est un débitmètre massique à fil chaud.

3. Générateur selon l'une des revendications précédentes, **caractérisé en ce qu'**il comprend dans la ligne de sortie (5), une vanne de commutation (10) reliée à une source auxiliaire d'oxygène sous pression (12).

4. Générateur selon l'une des revendications précédentes, **caractérisé en ce que** l'adsorbeur (7) contient une zéolite au lithium.

5. Générateur selon la revendication 4, **caractérisé en ce que** la zéolite au lithium est une LiLSX.

6. Générateur selon l'une des revendications précédentes, **caractérisé en ce qu'**il comprend un organe de détente (8) entre l'entrée (1) et l'unité PSA (3).

7. Générateur selon l'une des revendications précédentes, **caractérisé en ce que** la ligne de sortie (5) est reliée, en amont, à une capacité tampon (4).

8. Générateur selon la revendication 7, **caractérisé en ce que** la capacité tampon (4) forme un organe structurel de l'architecture du générateur.

9. Utilisation d'un générateur autonome d'oxygène conforme à l'une quelconque des revendications précédentes **caractérisés en ce que**, lorsque le débit mesuré par le débimètre 13 descend en-dessous d'un seuil donné, l'électronome (16) est ouverte établissant une fuite calibrée via la restrictuant (17), pour stimuler un minimum de consommation et continuer à faire travailler l'unité PSA 3 dans la gamme de débits correspondant à un plateau de pureté maximum d'oxygène.

## Claims

1. Self-contained oxygen generator comprising:
- an inlet (1) that can be connected to a source of pressurized air;
- a PSA unit (3) with at least one adsorber (7);
- an oxygen outlet line (5) that can be connected (6) to an overhead line supply circuit of a user;
- a flowmeter (13) positioned in the outlet line and providing an electrical signal representative of the flow rate of oxygen passing through the outlet line (5); and
- a leakage circuit (15) connected to the outlet line (5) and comprising, in series, a solenoid valve (16) that can be actuated in response to a signal (18) derived from the electrical signal (14) provided by the flowmeter (13), and a calibrated restriction (17).

2. Generator according to Claim 1, **characterized in that** the flowmeter (13) is a hot-wire mass flowmeter.

3. Generator according to either of the preceding claims, **characterized in that** it includes, in the outlet line (5), a switching valve (10) connected to an auxiliary source of pressurized oxygen (12).

4. Generator according to one of the preceding claims, **characterized in that** the adsorber (7) contains a lithium zeolite.

5. Generator according to Claim 4, **characterized in that** the lithium zeolite is an LiLSX.

6. Generator according to one of the preceding claims, **characterized in that** it includes a pressure-reducing device (8) between the inlet (1) and the PSA unit (3).

7. Generator according to one of the preceding claims, **characterized in that** the outlet line (5) is connected upstream to a buffer tank (4).

8. Generator according to Claim 7, **characterized in that** the buffer tank (4) forms a structural component of the architecture of the generator.

9. Use of a self-contained oxygen generator in accordance with any one of the preceding claims, **characterized in that**, when the flow rate measured by the flowmeter (13) falls below a given threshold, the solenoid valve (16) is opened establishing a calibrated leakage to via the restriction (17) so as to simulate a consumption minimum and to continue to make the PSA unit 3 work within the range of flow rates corresponding to a maximum oxygen purity plateau.

## Patentansprüche

1. Autonomer Sauerstoffgenerator, der Folgendes umfasst:
- einen Einlass (1), der an eine Druckluftquelle angeschlossen werden kann;
- eine DWS-Einheit (3) mit mindestens einem Adsorber (7);
- eine Sauerstoffaustrittsleitung (5), die an einen Kreislauf zur Versorgung eines Benutzers über den Luftweg angeschlossen werden kann (6);
- einen Durchflussmesser (13), der in der Austrittsleitung angeordnet ist und ein elektrisches Signal liefert, das für den Durchfluss des Sauerstoffs repräsentativ ist, der die Austrittsleitung (5) durchströmt; und
- einen Ablasskreislauf (15), der mit der Austrittsleitung (5) verbunden ist und in Reihe geschaltet ein Magnetventil (16), das als Reaktion auf ein Signal (18) betätigt werden kann, das von dem vom Durchflussmesser (13) gelieferten elektrischen Signal (14) abgeleitet ist, und eine kalibrierte Drossel (17) umfasst.

2. Generator nach Anspruch 1, **dadurch gekennzeichnet, dass** der Durchflussmesser (13) ein Hitzdraht-Massendurchflussmesser ist.

3. Generator nach einem der vorhergehenden Ansprüche, **dadurch gekennzeichnet, dass** er in der Austrittsleitung (5) ein Schaltventil (10) umfasst, das mit einer Zusatzquelle für unter Druck stehenden Sauerstoff (12) verbunden ist.

4. Generator nach einem der vorhergehenden Ansprüche, **dadurch gekennzeichnet, dass** der Adsorber (7) einen Lithium-Zeolith enthält.

5. Generator nach Anspruch 4, **dadurch gekennzeichnet, dass** der Lithium-Zeolith ein LiLSX ist.

6. Generator nach einem der vorhergehenden Ansprüche, **dadurch gekennzeichnet, dass** er ein Entspannungselement (8) zwischen dem Einlass (1) und der DWS-Einheit (3) umfasst.

7. Generator nach einem der vorhergehenden Ansprüche, **dadurch gekennzeichnet, dass** die Austrittsleitung (5) stromaufwärts mit einem Puffervolumen (4) verbunden ist.

8. Generator nach Anspruch 7, **dadurch gekennzeichnet, dass** das Puffervolumen (4) von einem Strukturelement der Architektur des Generators gebildet wird.

9. Verwendung eines autonomen Sauerstoffgenerators nach einem der vorhergehenden Ansprüche, **dadurch gekennzeichnet, dass**, wenn der vom Durchflussmesser (13) gemessene Durchfluss unter eine gegebene Untergrenze fällt, das Magnetventil (16) geöffnet wird, wodurch ein kalibrierter Ablass über die Drossel (17) bewirkt wird, um einen Mindestverbrauch zu stimulieren und die DWS-Einheit (3) weiter in dem Durchflussbereich arbeiten zu lassen, der einem Plateau der maximalen Sauerstoffreinheit entspricht.
